# EUROPÄISCHE PATENTSCHRIFT

(11) **EP 1 095 222 B1**
(45) Veröffentlichungstag und Bekanntmachung des Hinweises auf die Patenterteilung: **23.01.2002**
(21) Anmeldenummer: 99926486.4
(22) Anmeldetag: 31.05.1999
(51) Int. Cl.: F16H 25/08, F16H 25/18

(54) **AXIALSTELLTRIEB**
AXIAL ACTUATOR
REDUCTEUR DE POSITIONNEMENT AXIAL

(30) Priorität: 09.07.1998 DE 19830822
(43) Veröffentlichungstag der Anmeldung: 02.05.2001
(73) Patentinhaber: Diemer, Karl, 65510 Idstein/Heftrich (DE)
(72) Erfinder: Diemer, Karl, 65510 Idstein/Heftrich (DE)
(74) Vertreter: Fischer, Matthias, Dipl.-Ing.
(86) Internationale Anmeldenummer: EP9903762
(87) Internationale Veröffentlichungsnummer: WO0003157

(56) Entgegenhaltungen:
- DE-B- 2 457 886

## Beschreibung

Die Erfindung betrifft einen Axialstelltrieb mit wenigstens einem Paar von wendelförmigen Laufbahnen, die sich im Bereich einer Zylindermantelfläche um eine Axialachse drehbar erstrecken. Derartige axiale Verstelltriebe werden beispielsweise für Getriebe, Bremsen, Kupplungen, Sperrdifferentiale, Spanner, Pressen und dgl. eingesetzt.

Als Ausgangspunkt für die vorliegende Anmeldung kann die DE-B-2457 886 angesehen werden.

Axialstelltriebe werden dann verwendet, wenn eine Drehbewegung, auch auf sehr engem Raum und unter sehr großen Kräften, in eine Längsbewegung umgesetzt werden soll. Axialstelltriebe haben zueinander zeigende, in einer Gleitpaarung aneinanderliegende, wendelförmige Bahnen, die im Bereich einer Zylindermantelfläche um eine Zylinderaxialachse herum angeordnet sind. Es handelt sich bei der jeweiligen Bahnform quasi um Keile, die um eine Achse herumgewickelt sind. Eine Bewegung dieser beiden "Keile" gegeneinander, das bedeutet im vorliegenden Fall eine Drehung der beiden wendelförmigen Bahnen gegeneinander, bewirkt, daß die die Bahnen tragenden Körper sich relativ zueinander bewegen, sich annähern oder sich voneinander weg bewegen. Damit wird durch eine geringe Drehung über die Keilfläche der Wendelform eine Axialbewegung erreicht, mit der man entsprechende Schalt- bzw. Hubwege zurücklegen kann. Die geschilderte Ausführung wird im Stand der Technik verwendet, ist jedoch in Bezug auf Verschleißfestigkeit und Kraftübertragungskapazität begrenzt. Außerdem ist aufgrund der mit zunehmendem Drehwinkel zunehmenden Kippkräfte der Anwendungsbereich eingeschränkt.

Eine Aufgabe der Erfindung besteht darin, einen Axialstelltrieb zu schaffen, der bei minimalen äußeren Abmessungen eine optimale axiale Tragfähigkeit und Leichtgängigkeit erlaubt und entsprechend die geschilderten Nachteile des Standes der Technik vermeidet oder zumindest verringert.

Die Aufgabe wird gelöst mit einem Axialstelltrieb gemäß Anspruch 1. Ein derartig gestalteter erfindungsgemäßer Axialstelltrieb erlaubt eine leichtgängige Verdrehung der wendelförmigen Bahnen zueinander und entsprechend eine hohe Kraftübertragung.

In einer vorteilhaften Weiterbildung der Erfindung ist der Axialstelltrieb so gestaltet, daß zu dem ersten Paar von wendelförmigen Bahnen ein zweites Paar von wendelförmigen Bahnen relativ zum ersten Paar radial nach außen oder innen versetzt angeordnet ist, wobei zwischen diesen Bahnen ebenfalls ein radial geführter Axialnadel- oder Rollenkranz angeordnet ist, dessen Lauflänge ebenfalls im wesentlichen der Lauflänge der Bahnen entspricht. Besonders großer Vorteil dieser erfindungsgemäßen Weiterbildung ist die stark vergrößerte Winkelverdrehbarkeit unter Last, da aufgrund der Versetzung des zweiten Bahnpaares zum ersten Paar um 180° praktisch keine Kippkräfte mehr auftreten und eine Verkippung ausgeschlossen wird. Die bei den beschriebenen Axialstelltrieben eingesetzten Axialnadel- oder Rollenkränze erlauben es, daß infolge der Rollreibung aufgrund sehr geringer Verdrehkräfte sehr hohe Axialkräfte erzeugt werden können. So kann der Wirkungsgrad optimiert, und die Hystereseverluste können minimiert werden. Die Axialkräfte sind von der Steigung der wendelförmigen Bahnen (Keilflächen) abhängig und werden hier nur durch die zulässige Flächenpressung der Wälzkörper an den Kontaktstellen (Linienberührung) der Laufbahnen begrenzt. Durch die bereits erwähnte, konzentrisch ineinander und/oder um 180° versetzte Anordnung der Keilflächen wird bei Verdrehen eine achsparallele Bewegung des Gegenstücks ohne Verkippung bewirkt. Begrenzt man vorteilhafter Weise die Drehbewegung auf die Hälfte des theoretisch möglichen Winkelbereichs, ist immer noch ausreichende Axialkraftübertragung und Kippstabilität gewährleistet.

In vorteilhafter Weiterbildung der Erfindung können die Axialnadel- oder Rollenkränze handelsübliche Kränze sein, die radial aufgetrennt und auf die genannte Lauflänge abgelängt sind. Hierbei werden die Käfige der Rollenkränze entsprechend aufgetrennt. Dadurch sind ohne besonderen Aufwand kostengünstige Axialstelltriebe realisierbar.

Eine andere vorteilhafte Weiterbildung der Erfindung besteht darin, daß man mehrere Axialstelltriebe hintereinander anordnet und durch diese Hintereinanderschaltung den Stellweg entscheidend verlängert.

Auch die keilförmigen Segmente sind als wendelförmige schräge Ebenen preiswert herstellbar, haben vorzugsweise entweder radial aufgetrennte Serienkäfige oder sind leicht von Serienteilen abweichend modifiziert gestaltet. Eine vorteilhafte Weiterbildung der Erfindung besteht auch darin, daß die die Bahnen tragenden zylindrischen Körper, die sich im wesentlichen kreisförmig um eine Axialachse drehbar erstrecken, radial durch Gleit- oder Wälzlager z. B. auch Kugelkäfige geführt werden. Dies ergibt noch eine zusätzliche Leichtgängigkeit des Verstelltriebes und gleichzeitig eine Zunahme der Kippsicherheit bei optimaler Zentrierung.

Die Erfindung wird im folgenden unter Bezugnahme auf die Zeichnung in Einzelheiten beschrieben.
- Fig. 1: zeigt schematisch in perspektivischer Ansicht eine auf einem Unterteil eines Axialstelltriebs angeordnete, wendelförmige Bahn.
- Fig. 2: zeigt das zum in Fig. 1 dargestellten Unterteil zugehörige Oberteil.
- Fig. 3: zeigt ein dem Unterteil von Fig. 1 ähnliches Unterteil, jedoch mit zwei konzentrischen, wendelförmigen Bahnen in perspektivischer Ansicht.
- Fig. 4: zeigt in Schnittansicht eine Darstellung eines Axialstelltriebs, bei dem das in Fig. 3 dargestellte Unterteil eingesetzt ist.
- Fig. 5: zeigt das in Fig. 1 dargestellte Unterteil in Draufsicht.

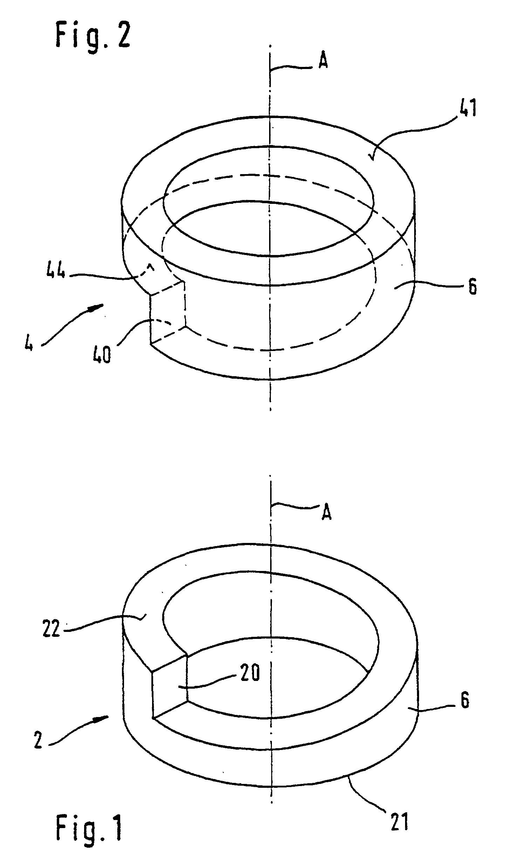

In Fig. 1 ist schematisch ein Unterteil 2 eines Axialstelltriebs 1 in Form eines Rings dargestellt, der eine zylindrische Mantelfläche 6 aufweist, die sich konzentrisch um eine Achse A erstreckt. Man kann gut eine Bahn 22 erkennen, die sich von der Unterkante einer senkrechten Sprungfläche 20 (in dieser Darstellung) gegen den Uhrzeigersinn wendelförmig entlang des Umfangs 6 des Unterteils 2 um die Vertikalachse A herum erstreckt und an der Oberkante der Sprungfläche 20 endet. Hierbei läuft die Bahn 22 um 360° im Kreis.

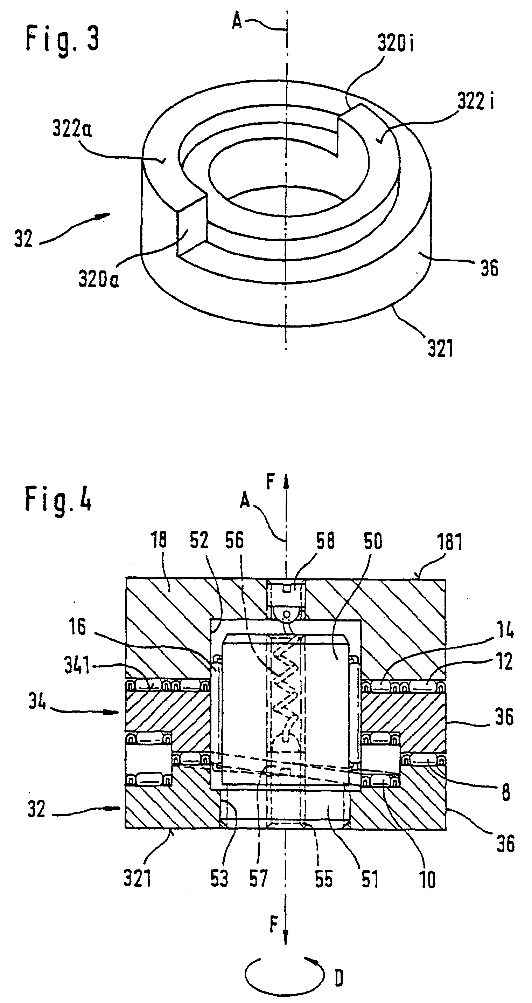

Fig. 2 zeigt das dem in Fig. 1 gezeigten Unterteil 2 entsprechende Oberteil 4 mit wendelförmiger Bahn 44, die analog zur Bahn 22 verläuft und (in dieser Darstellung) nach unten zeigt. Die Bahn 44 ist nicht direkt zu sehen und deshalb nur gestrichelt angedeutet. Zwischen den beiden Bahnen 22 und 44, die, wenn Sie um die selbe Achse A herumlaufen, stets äquidistant und damit gleichsam parallel laufen, ist erfindungsgemäß ein Axialrollenkranz 8 angeordnet (siehe z. B. Fig. 4), der an einer Stelle radial im Bereich zwischen zwei Taschen aufgetrennt ist, so daß er im wesentlichen die den Bahnen 22 und 24 entsprechende Wendelform einnehmen kann. Ist nun zwischen die beiden Bahnen 22 und 24 ein entsprechender Axialrollenkranz 8 eingelegt, so kann man das Oberteil 4 auf dem Oberteil 2 (in dieser Ausführung) gegen den Uhrzeigersinn drehen mit dem Ergebnis, daß sich das Oberteil 4 vom Unterteil 2 axial wegbewegt. Der Axialrollenkranz 8 legt hierbei stets die Hälfte der Drehung des Oberteils 4 gegenüber dem Unterteil 2 zurück. Die Rückdrehung des Oberteils 4 gegenüber dem Unterteil 2 erfolgt analog gegen den Uhrzeigersinn, geht einher mit einer Annäherung der beiden Teile zueinander und endet schließlich in der Ausgangsstellung. Wenn hier von Entfernung und Annäherung gesprochen wird, so bezieht sich dies freilich auf die bei den soeben beschriebenen Teilen rechtwinklig zur Vertikalachse A angeordneten Bodenflächen 21 und 41 von Oberteil 4 und Unterteil 2. Anhand der in den Fig. 1 und 2 dargestellten Teile soll die Anordnung der wendelförmigen Bahnen zueinander mit zwischengeordnetem Axialnadel- oder Rollenkranz prinzipiell erläutert werden.

In einer vorteilhaften Weiterbildung der Erfindung wird ein Unterteil 32, gezeigt in Fig. 3, verwendet, wobei hier zwei konzentrische, wendelförmige Bahnen 322a und 322i zu erkennen sind, deren Anfang und Ende jeweils die Sprungflächen 320a und 320i berühren. Die Besonderheit im Ausführungsbeispiel gemäß Fig. 3 gegenüber der in den Fig. 1 und 2 gezeigten Anordnung der wendelförmigen Bahnen besteht darin, daß beim Ausführungsbeispiel gemäß Fig. 3 aufgrund der um 180° versetzten wendelförmigen Bahnen 322i und 322a nahezu keine Kippmomente auftreten, wenn das Oberteil gegen das Unterteil gedreht wird.

In Fig. 4 ist in beispielhafter Weise schematisch im Schnitt dargestellt, wie ein, dem in Fig. 2 dargestellten Oberteil 4 analoges Oberteil 34 mit zwei konzentrischen wendelförmigen Bahnen über dem soeben beschriebenen Unterteil 32 angeordnet ist, wobei dazwischen ebenso wendelförmig geformte Axialrollenkränze 8 und 10 eingelegt sind. Die Darstellung in Fig. 4 ist nicht unbedingt maßstabgetreu und soll nur die Zuordnung der einzelnen Bauteile im Prinzip erläutern. Auch andere Details des in Fig. 4 gezeigten Beispiels wie Nabe, Feder, Schrauben und Gewinde sind nur zu Erläuterung eines Funktionsmodells genannt. Sie sind nicht Bestandteil der Erfindung.

Auf der oberen, ringförmigen Bodenfläche 341 des Oberteils 34 sind Axialnadel- oder Rollenlager 12 und 14 angeordnet, die einen Druckflansch 18 gegen das Oberteil 34 axial abstützen und ihn tragen. Im Innenraum von Oberteil 32 und Unterteil 34 ist eine im wesentlichen zylindrische Nabe 50 angeordnet, deren Zylinderaußenwand die Laufbahn eines Radialnadellagers 16 darstellt, während sich die Außenlaufbahn für das Radialnadellager 16 aus den Innenzylindermantelflächen von Unterteil 32, Oberteil 34 und einer sacklochförmigen Vertiefung 52 des Druckflansches 18 ergibt. Das Radialnadellager 16 ist im Ausführungsbeispiel gemäß in Fig. 4 im Innenbereich von Ober- und Unterteil angeordnet. Es ist ebenso eine Anordnung möglich, bei der Ober- und Unterteil von einen Radialnadellager von außen umfangen und zentriert werden.

Die Nabe 50 ist in ihrem in Fig. 4 gezeigten unteren Endbereich mit einem mit Außengewinde versehenen Schraubenflansch 51 versehen, der im vorliegenden Ausrührungsbeispiel in einem im Unterteil 32 angeordneten Innengewinde 53 eingeschraubt ist. Man erkennt im Zentralbereich der Nabe 50 ein durchgehendes Innengewinde 55, in das eine mit einer Feder 56 gelenkig verbundene Ösenschraube 57 eingedreht ist. In der Mitte des in Fig. 4 nach oben, vom Axialstelltrieb wegzeigenden Druckflansches 18 ist eine, der Ösenschraube 56 entsprechende, Ösenschraube 58 eingedreht, die in die zuvor erwähnte Feder 56 eingehängt ist. Wie bereits aus der Zeichnung zu ersehen ist, handelt es sich hier um eine Spiralzugfeder 56, durch deren Einsatz der Axialstelltrieb spielfrei gehalten werden kann.

Die hier beschriebene Vorrichtung funktioniert folgendermaßen: Das zwischen Druckflansch 18 und Unterteil 32 angeordnete Oberteil 34 wird entsprechend dem Richtungspfeil D gedreht, wodurch es sich vom Unterteil 32 entfernt und den Druckflansch 18 vom Unterteil 32 in Richtung der Pfeile F auseinanderbewegt bzw. -drückt und dabei gegen die Feder 56 arbeitet. Wird das Oberteil 34 in entgegengesetzter Richtung zurückgedreht, so nähern sich Druckflansch 18 und Unterteil 32 wieder einander an. Die Axialrollenkränze 12 und 14 verhindern ein Mitdrehen des Druckflansches 18 mit dem Oberteil 34. Auseinanderzudrückende Vorrichtungsteile werden zweckmäßigerweise an den einander gegenüberliegend angeordneten Druckflächen 321 (Unterteil 32) und Druckfläche 181 (Druckflansch 18) angeordnet. Die Proportionen des in Fig. 4 gezeigten Ausrührungsbeispiels sind in vieler Hinsicht variierbar und entsprechend dem Anforderungsfall anzupassen. So kann der Druckflansch beispielsweise lediglich eine Lauf- oder Axialscheibe sein.

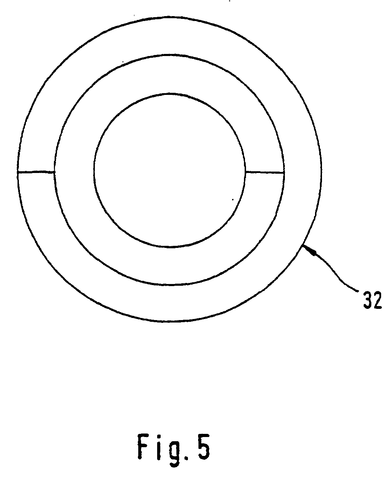

Die Anordnung bzw. auch Anzahl der wendelförmigen Bahnen ist je nach Bedarf wählbar. Fig. 5 zeigt die Draufsicht des in den Fig. 3 und 4 im besonderen beschriebenen Unterteils 32. Hierbei sind zwei um 180° versetzte, konzentrisch angeordnete, wendelförmige Bahnen vorgesehen.

Der Einsatzbereich des erfindungsgemäßen Axialstelltriebs ist universell groß. So ist die Anwendung für Kupplungsaus/einrückung bei Kraftfahrzeugen (z.B. über eine zentrale Betätigung über Elektromotor) möglich. Es könnte hierbei die komplette Kupplungspedalerie und -mechanik entfallen. Ebenso kann der erfindungsgemäße Axialstelltrieb bei Scheibenbremsen eingesetzt werden, und zwar für eine elektromechanische Bremsbetätigung wie auch eine Feststelleinrichtung. Denkbar ist auch eine Gangeinrückung bei Schaltgetrieben oder eine axiale Lamellenanpressung bei Automatikgetrieben, Bremsen oder Kupplungen sowie Differentialsperren. Weitere Anwendungsgebiete betreffen Axialwellenverschiebungen, Spannelemente und Pressen. Die hiermit erreichten Vorteile gegenüber den bekannten bisherigen Lösungen umfassen einen einfachen mechanischen Aufbau, äußerst geringe Bauhöhe, Leichtgängigkeit bei hohem Wirkungsgrad und geringen Hystereseverlusten, die bereits erwähnte hohe axiale Tragfähigkeit und die auf kleinstem Raum mögliche Umsetzung einer Rotationsbewegung in eine Translationsbewegung und - bei entsprechend hoher Steigerung der wendelförmigen Bahnen - auch umgekehrt.

Die einzelnen Bestandteile des Axialstelltriebes sind ohne besondere Schwierigkeiten herstellbar. So können die konzentrisch ineinander liegenden, im wesentlichen ringförmigen, wendelförmigen Bahnen der Keilflächen neben der klassischen spanabhebenden Bearbeitung u. a. auch als Fließpreß- oder Sinterteile hergestellt werden, eventuell auch aus hoch belastbarem Druckguß.

Zweckmäßigerweise werden die Axialnadel- oder Rollenkränze an einer Tasche radial aufgetrennt und je nach Teilungshöhe axial auseinandergezogen. Bei sehr hohen Steigungen könnte ggf. ein Kunststoffkäfig entsprechend gespritzt werden.

## Patentansprüche

1. Axialstelltrieb mit einem Oberteil (4) und einem Unterteil (2), die zueinander verdrehbar angeordnet sind und jeweils wenigstens eine erste wendelförmige Bahn (44, 22) aufweisen, wobei die zueinander zeigenden Bahnen (44, 22) sich entlang einer Zylindermantelfläche (6) um eine Axialachse erstrecken, **dadurch gekennzeichnet, daß** zwischen den wenigstens zwei Bahnen (44, 22) ein radial geführter Axial-Nadelkranz oder ein Axial-Rollenkranz (8) angeordnet ist, dessen Lauflänge im wesentlichen der Länge der Bahnen entspricht.

2. Axialstelltrieb nach Anspruch 1, **gekennzeichnet durch** wenigstens ein weiteres Paar von zweiten wendelförmigen Bahnen, die relativ zu den ersten Bahnen (44, 22) radial nach außen oder innen und entlang der Zylindermantelfläche zu den ersten Bahnen (44, 22) um 180° versetzt angeordnet sind, wobei zwischen den wenigstens zweiten Bahnen ein zweiter radial geführter Axial-Nadelkranz oder ein Axial-Rollenkranz (10) angeordnet ist, dessen Lauflänge im wesentlichen der Länge der zweiten Bahnen entspricht.

3. Axialstelltrieb nach Anspruch 1 oder 2, **dadurch gekennzeichnet, daß** der/die Axial-Nadel oder Rollenkranz/ Kränze (8,10) handelsübliche Kränze sind, die radial aufgetrennt und auf die Lauflänge abgelängt sind.

4. Axialstelltrieb nach Anspruch 1, 2 oder 3, **dadurch gekennzeichnet, daß** das Oberteil und das Unterteil, die sich im wesentlichen kreisförmig um die Axialachse drehbar erstrecken, radial durch Wälzlager (16) geführt werden.

5. Axialstelltrieb nach einem der vorhergehenden Ansprüche, **dadurch gekennzeichnet, daß** das Oberteil und das Unterteil, die sich im wesentlichen kreisförmig um die Axialachse drehbar erstrecken, axial über eine elastische Zugeinrichtung (56) verbunden sind.

6. Axialstelltrieb, **gekennzeichnet durch** mehrere hintereinander angeordnete Axialstelltriebe nach einem der vorhergehenden Ansprüche.

## Claims

1. An axial actuator including an upper part (4) and a lower part (2) each disposed rotatable relative to the other and each comprising at least one first helical raceway (44, 22), said raceways (44, 22) facing each other extending along a cylindrical shell surface area (6) about an axial axis, **characterized in that** between said at least two raceways (44, 22) a radially guided axial needle race or an axial roller race (8) is disposed, whose running length substantially corresponds to the length of said raceways.

2. The axial actuator as set forth in claim 1, **characterized in that** at least one further pair of second helical raceways is provided disposed radially outwards or inwards relative to said first raceways (44, 22) and offset by 180° along said cylindrical shell surface area relative to said first raceways (44, 22), between said at least two raceways a second radially guided axial needle race or an axial roller race (10) being disposed, whose running length substantially corresponds to the length of said second raceways.

3. The axial actuator as set forth in claim 1 or 2, **characterized in that** said axial needle or roller race(s) (8,10) are commercially available races which are radially split and cut to said running length.

4. The axial actuator as set forth in claim 1, 2 or 3, **characterized in that** said upper part and said lower part extending rotatable substantially circularly about said axial axis are guided radially by antifriction bearings (16).

5. The axial actuator as set forth in any of the preceding claims, **characterized in that** said upper part and said lower part extending rotatable substantially circularly about said axial axis are connected axially via an elastic tension means (56).

6. An axial actuator comprising a train of axial actuators as set forth in any of the preceding claims.

## Revendications

1. Réducteur de positionnement axial présentant une partie supérieure (4) et une partie inférieure (2) qui sont disposées de manière à pouvoir réciproquement tourner et qui présentent chacune au moins une première piste (44, 22) en forme de colimaçon, les pistes (44, 22) dirigées l'une vers l'autre s'étendant le long d'une surface de corps de cylindre (6) autour d'un axe axial, **caractérisé en ce qu'**entre les pistes (44, 22), au moins au nombre de deux, une couronne d'aiguilles axiale ou une couronne de rouleaux axiale (8) guidée radialement est disposée, dont la longueur de course correspond substantiellement à la longueur des pistes.

2. Réducteur de positionnement axial selon la revendication 1, **caractérisé par** au moins une paire supplémentaire de secondes pistes en colimaçon qui sont disposées par rapport aux premières pistes (44, 22) radialement vers l'extérieur ou l'intérieur et décalées de 180° le long de la surface du corps de cylindre par rapport aux premières pistes (44, 22), entre les au moins secondes pistes une seconde couronne d'aiguilles axiale ou couronne de rouleaux axiale (10) étant guidée de manière radiale, dont la longueur de course correspond substantiellement à la longueur des secondes pistes.

3. Réducteur de positionnement axial selon les revendications 1 ou 2, **caractérisé en ce que** la/les couronne/s (8, 10) d'aiguilles ou de rouleaux axiale/s sont des couronnes courantes dans le commerce qui sont ouvertes radialement et coupées en longueur à la longueur de course.

4. Réducteur de positionnement axial selon les revendications 1, 2 ou 3, **caractérisé en ce que** la partie supérieure et la partie inférieure qui s'étendent substantiellement en cercle autour de l'axe axial en pouvant être tournées, sont guidées radialement par des paliers à roulement (16).

5. Réducteur de positionnement axial selon l'une quelconque des revendications précédentes, **caractérisé en ce que** la partie supérieure et la partie inférieure qui s'étendent de manière à pouvoir tourner substantiellement en cercle autour de l'axe axial, sont raccordées axialement par l'intermédiaire d'un mécanisme de traction (56) élastique.

6. Réducteur de positionnement axial, **caractérisé par** plusieurs réducteurs de positionnement axiaux selon l'une quelconque des revendications précédentes, disposés l'un derrière l'autre.
